# DEMANDE DE BREVET EUROPEEN

(11) **EP 2 372 993 A1**
(43) Date de publication de la demande: **05.10.2011**
(21) Numéro de dépôt: 11159661.5
(22) Date de dépôt: 24.03.2011
(51) Int. Cl.: H04M 3/42, H04L 12/12

(54) **Gestion de consommation d'energie de dispositifs communicants en fonction de la presence d'un utilisateur**

(30) Priorité: 29.03.2010 FR 1052275
(71) Demandeur: Alcatel Lucent, 75007 Paris (FR)
(72) Inventeur: Lamoureux, Christophe, 67400, ILLKIRCH (FR); Bailleau, Vincent, 67400, ILLKIRCH (FR)
(74) Mandataire: Mouney, Jérôme

(57) **Abrégé**

Pour gérer la consommation d'énergie d'un ensemble de dispositifs communicants (DC) associé à un utilisateur qui est associé en outre à un terminal de communication (TC), le terminal de communication (TC) et l'ensemble de dispositifs communicants (DC) étant aptes à communiquer avec un serveur à travers un réseau de télécommunications (RT), le serveur reçoit des données d'évènement (DonE) relatives à la localisation de l'utilisateur et à un état de présence de l'utilisateur dans un moyen de communications instantanées incluse dans le terminal de communication (TC), depuis au moins un détecteur de présence lié au terminal de communication, détermine des règles de localisation et des règles d'état de présence en fonctions des données d'évènement (DonE), et transmet une requête à au moins un contrôleur (CGC) associé à l'ensemble de dispositifs communicants (DC) afin que le contrôleur (CGC) régule la consommation d'énergie de l'ensemble de dispositifs communicants (DC) en fonction des règles de localisation et des règles d'état de présence.

## Description

La présente invention concerne une gestion de consommation d'énergie de dispositifs communicants en fonction de la présence d'un utilisateur.

Actuellement, un utilisateur peut communiquer et travailler avec différents dispositifs communicants électriques, notamment dans le contexte d'une entreprise.

En fonction de son activité ou de sa situation, un utilisateur n'utilise qu'une partie de ces dispositifs électriques à un instant donné, tandis que les autres dispositifs électriques restent alimentés en électricité et émettent des ondes.

Certains dispositifs implémentent des modes d'économie d'énergie, tel que des modes d'hibernation ou de mise en veille. Ces modes peuvent être déclenchés manuellement par l'utilisateur ou automatiquement en fonction de périodes d'inactivité, par exemple par rapport à l'utilisation d'un clavier ou d'une souris.

Cependant, les modes d'économie d'énergie déclenchés manuellement sont souvent oubliés par l'utilisateur, tandis que les modes d'économie d'énergie déclenchés automatiquement ne sont pas optimisés et rarement configurés correctement par l'utilisateur.

Pour des raisons d'économie, les entreprises peuvent être amenées à s'intéresser à la régulation de la consommation d'énergie de leurs dispositifs, notamment pour éviter les gaspillages dus au fonctionnement inutile de dispositifs non utilisés et que leurs utilisateurs ont oublié d'éteindre

Un objectif de l'invention est de remédier aux inconvénients précédents en proposant notamment un système de gestion de consommation d'énergie de dispositifs électriques communicants.

Pour atteindre cet objectif, un procédé pour gérer la consommation d'énergie d'un ensemble de dispositifs communicants associé à un utilisateur qui est associé en outre à un terminal de communication, le terminal de communication et l'ensemble de dispositifs communicants étant aptes à communiquer avec un serveur à travers un réseau de télécommunications, comprend les étapes suivantes dans le serveur :
recevoir des données d'évènement relatives à la localisation de l'utilisateur et à un état de présence de l'utilisateur dans un moyen de communications instantanées incluse dans le terminal de communication, depuis au moins un détecteur de présence associé au terminal de communication,
déterminer des règles de localisation et des règles d'état de présence en fonctions des données d'évènement, et
transmettre une requête à au moins un contrôleur associé à l'ensemble de dispositifs communicants afin que le contrôleur régule la consommation d'énergie de l'ensemble de dispositifs communicants en fonction des règles de localisation et des règles d'état de présence.

Avantageusement, l'ensemble de dispositifs communicants est mis automatiquement dans un mode adapté à l'activité de l'utilisateur, afin de réguler leur consommation d'énergie, chaque dispositif communicant ne consommant plus ou consommant moins d'énergie électrique lorsque l'utilisateur n'est plus actif et qu'il na pas besoin de ces dispositifs communicants.

Les données d'évènements relatives à l'état de présence de l'utilisateur sont issues d'un détecteur de présence qui est associé au terminal de communication, par exemple inclus dans terminal de communication qui intègre un moyen de communications instantanées délivrant des informations de présence de l'utilisateur. Les données d'évènements relatives à la localisation de l'utilisateur sont issues d'un détecteur de présence qui est également associé au terminal de communication, le détecteur de présence étant par exemple inclus dans terminal de communication qui intègre un moyen de géolocalisation ou situé dans une même zone géographique que le terminal de communication.

Selon d'autres caractéristiques de l'invention, l'ensemble de dispositifs communicants peut comprendre des dispositifs fixes et des dispositifs mobiles qui sont personnels à l'utilisateur, ou peut comprendre des dispositifs fixes qui sont partagés entre plusieurs utilisateurs, ou les dispositifs fixes peuvent être regroupés par zones géographiques.

Selon une autre caractéristique de l'invention, le contrôleur peut réguler la consommation d'énergie de l'ensemble de dispositifs communicants en mettant chaque dispositif communicant dans l'un des modes selon lesquels toutes les fonctionnalités du dispositif communicant sont disponibles, seulement certaines fonctionnalités prédéfinies du dispositif communicant, et aucune fonctionnalité du dispositif communicant n'est disponible.

Par exemple un téléphone fixe personnel de l'utilisateur est mis hors tension lorsque l'utilisateur est absent de son lieu de travail. Le téléphone fixe personnel de l'utilisateur ne consomme donc plus d'énergie électrique lorsque l'utilisateur est absent.

Selon une autre caractéristique de l'invention, des dispositifs fixes étant partagés entre plusieurs utilisateurs et tous les utilisateurs ayant un état de présence donné associé à une règle d'état de présence, le serveur peut recevoir des données d'évènement relatives à l'état de présence de chaque utilisateur, déterminer une règle d'état de présence en fonctions des données d'évènement, et transmettre une requête à au moins un contrôleur associé à l'ensemble de dispositifs fixes partagés entre les utilisateurs donnés afin que le contrôleur régule la consommation d'énergie de l'ensemble de dispositifs communicants en fonction de la règle d'état de présence.

Par exemple, l'état de présence de tous les utilisateurs dans leur messagerie instantanée est à un état de type "hors ligne" ou "absent", et le serveur transmet une requête à chaque contrôleur associé à un dispositif communicant partagé entre les utilisateurs pour commander la mise hors tension de chaque dispositif communicant partagé, afin que chaque dispositif communicant partagé ne consomme plus d'énergie électrique.

L'invention concerne également un serveur pour gérer la consommation d'énergie d'un ensemble de dispositifs communicants associé à un utilisateur qui est associé en outre à un terminal de communication, le terminal de communication et l'ensemble de dispositifs communicants étant aptes à communiquer avec le serveur à travers un réseau de télécommunications, le serveur comprenant :
des moyens pour recevoir des données d'évènement relatives à la localisation de l'utilisateur et à un état de présence de l'utilisateur dans un moyen de communications instantanées incluse dans le terminal de communication, depuis au moins un détecteur de présence associé au terminal de communication,
des moyens pour déterminer des règles de localisation et des règles d'état de présence en fonctions des données d'évènement, et
des moyens pour transmettre une requête à au moins un contrôleur associé à l'ensemble de dispositifs communicants afin que le contrôleur régule la consommation d'énergie de l'ensemble de dispositifs communicants en fonction des règles de localisation et des règles d'état de présence.

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention, et
- la figure 2 est un algorithme d'un procédé de gestion de consommation d'énergie de dispositifs communicants selon une réalisation de l'invention.

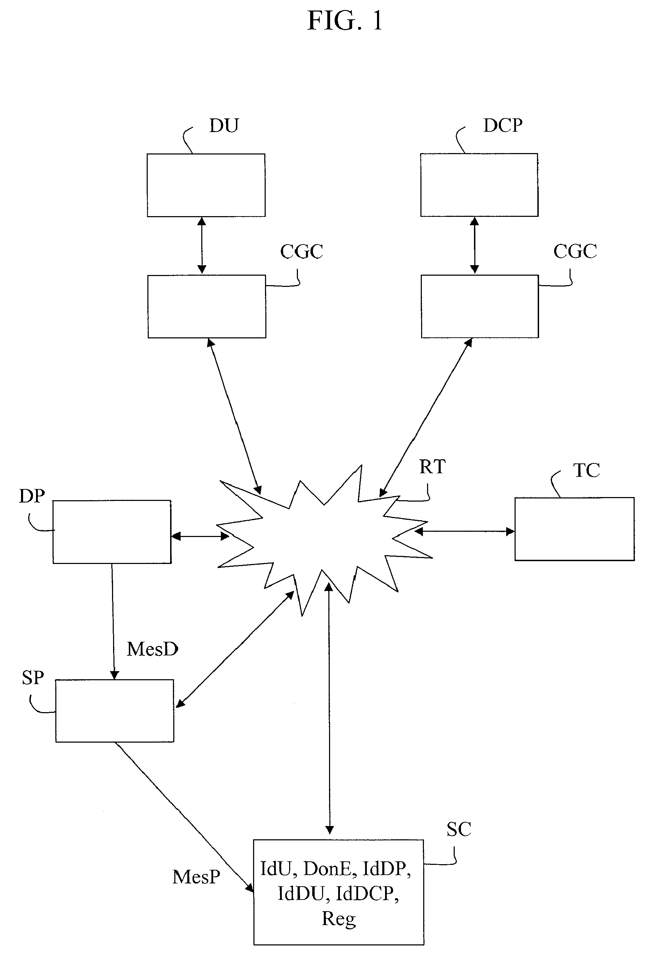

En référence à la figure 1, un système de communication comprend au moins un détecteur de présence DP, un serveur de présence SP, un serveur de communication SC, au moins un terminal de communication TC, au moins un moins un dispositif communicant DU qui est personnel à l'utilisateur, et au moins un dispositif communicant DCP partagé entre plusieurs utilisateurs, reliés entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT comprend un réseau de paquets à haut débit de type IP ("Internet Protocol" en anglais), tel que l'internet ou un intranet.

Par exemple, le terminal de communication TC peut être un ordinateur personnel ou un terminal intelligent pouvant communiquer avec le réseau de télécommunications par une liaison filaire ou sans fil.

A titre d'exemples, un dispositif communicant DU qui est personnel à l'utilisateur est un téléphone fixe, un ordinateur, un terminal de radiocommunications cellulaire mobile par exemple de type GSM ("Global System for Mobile communications" en anglais) ou UMTS ("Universal Mobile Telecommunications System" en anglais), ou encore comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anlais) ou conforme à l'une des normes 802.1x, ou de moyenne portée selon le protocole WIMAX ("World wide Interoperability Microwave Access" en anglais).

A titre d'exemples, un dispositif communicant DCP partagé entre plusieurs utilisateurs est une imprimante, un scanneur, ou un télécopieur.

II est considéré que l'utilisateur peut posséder ou être associé à plusieurs types de dispositifs communicants.

Les dispositifs communicants peuvent être répartis entre des dispositifs fixes, tels qu'un téléphone fixe ou un ordinateur, et des dispositifs mobiles, tels qu'un terminal de radiocommunications cellulaire mobile ou un assistant numérique personnel communicant PDA.

Par ailleurs, les dispositifs fixes peuvent être regroupés par zones géographiques. Par exemple, l'utilisateur possède un téléphone fixe et un ordinateur à son lieu de travail et également à son domicile.

Chaque dispositif communicant est associé à l'utilisateur, qui est par exemple le propriétaire du dispositif ou l'unique personne à laquelle est attribué le dispositif dans un lieu de travail par exemple.

Lorsque le dispositif communicant DU ou DCP est sous tension, il peut être dans un mode "en service" dans lequel toutes les fonctionnalités du dispositif sont disponibles, ou dans un mode restreint "en veille" dans lequel seulement certaines fonctionnalités prédéfinies du dispositif sont disponibles. Lorsque le dispositif communicant est hors tension, il est dans un mode "hors service" dans lequel aucune fonctionnalité du dispositif n'est disponible. Le dispositif consomme le plus de l'énergie lorsqu'il est sous tension en mode "en service" qu'en mode "en veille", et ne consomme pas d'énergie lorsqu'il est hors tension, c'est-à-dire en mode "hors service".

Le dispositif communicant DU ou DCP est associé à un contrôleur de gestion de consommation CGC.

Le contrôleur de gestion de consommation CGC peut être une interface d'alimentation qui est un boîtier comprenant un interrupteur qui est branché sur le réseau électrique. Le contrôleur de gestion de consommation CGC en tant qu'interface d'alimentation commande l'alimentation en énergie électrique du dispositif communicant et permet de mettre soit sous tension soit hors tension ce dernier.

Dans le cas d'un téléphone de type POE, le contrôleur de gestion de consommation CGC peut être incorporé dans le téléphone, sans être branché sur le réseau électrique. La mise hors tension du téléphone permet également d'économiser l'énergie nécessaire à l'alimentation du téléphone.

Le contrôleur de gestion de consommation CGC peut être un équipement de réseau apte à communiquer avec le dispositif communicant DU ou DCP selon un protocole adapté au type du dispositif communicant pour configurer le dispositif communicant, ledit protocole étant par exemple conforme au standard CSTA ("Computer-Supported Telecommunications Applications" en anglais).

Le contrôleur de gestion de consommation CGC est relié au serveur de communication SC via le réseau de télécommunications RT. Le contrôleur de gestion de consommation CGC communique avec le serveur de communication SC par exemple via le protocole Ethernet. Le contrôleur de gestion de consommation CGC est commandé par le serveur SC, par exemple pour mettre un dispositif communicant associé à un mode "en service" ou à un mode "en veille", ou encore à un état tel que "circuit ouvert" dans lequel le dispositif communiquant est mis hors tension ou à un autre état tel que "circuit fermé" dans lequel le dispositif communiquant est mis sous tension. Le serveur de communication SC commande le contrôleur de gestion de consommation CGC en fonction d'un message reçu depuis le serveur de présence SP.

Par exemple, le serveur de communication SC est un commutateur PABX ("Private Automatic Branch eXchange" en anglais) ou communique directement avec un commutateur PABX. Le serveur de communication SC comprend des moyens, tels qu'un logiciel ou une combinaison de matériel informatique et de logiciel, configurés pour commander notamment une mise sous tension, ou hors tension, ou en veille, de dispositifs communicants associés à l'utilisateur.

Le serveur de présence SP transmet un message au serveur de communication SC suite à la détection d'un évènement relatif à une présence de l'utilisateur dans une zone géographique donnée. Un tel évènement est détecté par un détecteur de présence DP relié au serveur de présence SP.

Le serveur de présence SP peut être informé d'un évènement détecté dans le temps, l'évènement correspondant au début ou à la fin d'un intervalle de temps prédéfini. Par exemple, un intervalle de temps est une plage horaire prédéfinie correspondant à un temps prévu de présence ou d'absence de l'utilisateur dans la pièce dans laquelle est situé le terminal de communication TC. Dans le cadre d'une entreprise, un intervalle de temps peut correspondre à une plage horaire prédéfinie pendant laquelle il est prévu que l'utilisateur soit présent dans son lieu de travail, telle que de 8h à 20h. Dans ce cas, un détecteur de présence DP peut être assimilé à un module logiciel contrôlant des horaires programmés relatifs à l'utilisateur. De manière plus précise, d'autres intervalles de temps peuvent correspondre à des plages horaires d'un agenda défini par l'utilisateur, de telles plages horaires étant relatives à des absences de l'utilisateur, par exemple pour des déplacements professionnels. Dans ce cas, un détecteur de présence DP peut être assimilé à un module logiciel gérant un agenda de l'utilisateur.

Le serveur de présence SP peut être informé d'un évènement détecté dans une zone géographique donnée, l'évènement correspondant à l'entrée ou à la sortie de l'utilisateur d'une zone géographique donnée. Par exemple, cet évènement est détecté par une identification RFID ("Radio Frequency IDenfication" en anglais), au moyen d'un badge de l'utilisateur pour accéder à ladite zone. Par exemple dans le cadre d'une entreprise, une zone géographique peut être le site de l'entreprise, un bâtiment de l'entreprise dans lequel travaille l'utilisateur, ou encore le bureau de l'utilisateur. Dans ce cas, un détecteur de présence DP peut être assimilé à une borne d'accès à la zone géographique. Selon un autre exemple, un détecteur de présence DP peut être un module de localisation associé à un terminal mobile de l'utilisateur, permettant de localiser une zone géographique dans laquelle est situé l'utilisateur.

En outre, le serveur de présence SP peut être informé de la présence de l'utilisateur lorsque ce dernier ouvre une session sur son ordinateur personnel qui est connecté au réseau de l'entreprise et qui est supposé être situé à proximité du terminal de communication TC. Dans ce cas, un détecteur de présence DP peut être assimilé à un module logiciel inclus dans l'ordinateur personnel qui contrôle l'ouverture et la fermeture de session par l'utilisateur.

Le serveur de présence SP peut être informé d'un évènement détecté par rapport à un état de présence de l'utilisateur par l'intermédiaire d'une messagerie instantanée. Par exemple, un détecteur de présence DP peut être assimilé à un module logiciel inclus dans l'ordinateur personnel qui intègre un moyen de communications instantanées délivrant des informations de présence de l'utilisateur. Notamment, le détecteur de présence transmet un état de présence actuel de l'utilisateur à un serveur de présence qui est relié au serveur de communication SC, par exemple suite à un changement de l'état de présence de l'utilisateur. Par exemple, l'utilisateur peut avoir un état de présence du type "en ligne", "hors ligne", "occupé", ou "absent". Cet état de présence peut être configuré automatiquement ou manuellement.

De manière générale, un détecteur de présence DP a pour fonctionnalité de détecter la présence de l'utilisateur dans une zone géographique donnée, ou un état de présence de l'utilisateur dans une messagerie instantanée, ou encore de détecter une présence de l'utilisateur en fonction d'un agenda de l'utilisateur.

Selon une réalisation de l'invention, lorsqu'un détecteur de présence DP détecte un évènement, le détecteur transmet un message, appelé message de détection MesD par la suite, dans un format prédéfini au serveur de présence SP.

Le message MesD contient un identificateur IdDP du détecteur de présence DP, un identificateur IdU de l'utilisateur et des données d'évènement DonE relatives à l'évènement détecté. Selon un premier exemple, le détecteur de présence DP est un module logiciel gérant un agenda de l'utilisateur et les données d'évènement DonE sont relatives au début ou à la fin d'une plage horaire prédéfinie. Selon un deuxième exemple, le détecteur de présence DP peut être une borne d'accès à une zone géographique et les données d'évènement DonE sont relatives à la date et l'heure d'identification du badge RFID de l'utilisateur ainsi qu'au type d'action de l'utilisateur, qui peut correspondre à l'entrée ou la sortie de l'utilisateur de la zone. Selon un troisième exemple, le détecteur de présence DP est un module logiciel associé à une messagerie instantanée de l'utilisateur et les données d'évènement DonE sont relatives à l'état de présence de l'utilisateur dans la messagerie instantanée.

Suite à la réception du message de détection MesD transmis par le détecteur de présence DP, le serveur de présence SP transmet un message, appelé message de présence MesP par la suite, au serveur de communication SC. Par exemple, le message MesP contient l'identificateur IdDP du détecteur de présence DP, l'identificateur IdU de l'utilisateur et les données d'évènement DonE optionnellement modifiées dans un autre format.

Suite à la réception du message de présence MesP transmis par le serveur de présence SP, le serveur de communication SC commande le contrôleur de gestion de consommation CGC pour mettre au moins un dispositif DU ou DCP dans un mode "en service", "en veille", ou "hors service".

A cette fin, le serveur de communication SC analyse les données d'évènement DonE pour déterminer des règles Reg et identifier un identificateur IdDU ou IdDCP d'un dispositif communicant DU ou DCP associé à l'identificateur d'utilisateur IdU. Le serveur de communication SC détermine l'adresse du contrôleur de gestion de consommation CGC associé au dispositif communicant et transmet une requête au contrôleur CGC pour commander la mise sous tension ou hors tension, ou encore en veille du dispositif communicant en fonction des règles données Reg.

Selon un exemple, si les données d'évènement DonE sont relatives à l'entrée de l'utilisateur dans une zone géographique correspondant au lieu de travail ou à un horaire de d'arrivée au travail de l'utilisateur, le serveur SC commande la mise sous tension de dispositifs communicants fixes de l'utilisateur. Selon un deuxième exemple, si les données d'évènement DonE sont relatives à la sortie de l'utilisateur d'une zone géographique correspondant au lieu de travail ou à un horaire de départ du travail de l'utilisateur, le serveur SC commande la mise hors tension de dispositifs communicants fixes de l'utilisateur.

Dans le serveur de communication SC sont mémorisées des règles de gestion liées à la présence de l'utilisateur par rapport aux dispositifs communicants.

Par exemple, des règles sont réparties en au moins trois catégories : des règles de temps, des règles d'état de présence, et des règles de localisation.

Des règles de temps peuvent être de la forme suivante :
- Les dispositifs fixes du lieu de travail de l'utilisateur et les dispositifs partagés sont en mode "en service" dans une plage horaire de 8h00 à 17h00, et en mode "hors service" en dehors de cette plage.
- Les dispositifs mobiles de l'utilisateur sont en mode "en service" dans des plages horaires de 7h00 à 8h00 et de 17h00 à 18h00, et en mode "hors service" en dehors de ces plages.
- Les dispositifs fixes du domicile de l'utilisateur sont en mode "en service" dans une plage horaire de 17h00 à 20h00, et en mode "hors service" en dehors de cette plage.

Des règles d'état de présence peuvent être de la forme suivante :
- Les dispositifs fixes du lieu de travail de l'utilisateur sont en mode "hors service" lorsque l'état de présence de l'utilisateur est "hors ligne" ou "absent", et en mode "hors service" lorsque l'état de présence de l'utilisateur est différent de "hors ligne" et "absent".
- Les dispositifs partagés sont en mode "hors service" lorsque l'état de présence de tous les utilisateurs est "hors ligne" ou "absent", et en mode "hors service" lorsque l'état de présence d'au moins un utilisateur est différent de "hors ligne" et "absent".
- Les dispositifs mobiles de l'utilisateur sont en mode "en veille" lorsque l'état de présence de l'utilisateur est "hors ligne" ou "absent", et en mode "en service" lorsque l'état de présence de l'utilisateur est différent de "hors ligne" et "absent".
- Les dispositifs fixes du domicile de l'utilisateur sont en mode "hors service" lorsque l'état de présence de l'utilisateur est "hors ligne" ou "absent", et en mode "en service" lorsque l'état de présence de l'utilisateur est différent de "hors ligne" et "absent".

Des règles de localisation peuvent être de la forme suivante :
- Les dispositifs fixes du lieu de travail de l'utilisateur sont en mode "en service" lorsque l'utilisateur est localisé au lieu de travail, et en mode "hors service" lorsque l'utilisateur est localisé à l'extérieur du lieu de travail.
- Les dispositifs mobiles de l'utilisateur sont en mode "en service" lorsque l'utilisateur est localisé à l'extérieur du de travail ou en voyage, et en mode "en veille" lorsque l'utilisateur est localisé au lieu de travail ou à son domicile.
- Les dispositifs fixes du domicile de l'utilisateur sont en mode "en service" lorsque l'utilisateur est localisé à son domicile, et en mode "hors service" lorsque l'utilisateur est localisé à l'extérieur de son domicile, par exemple en voyage ou au lieu de travail.

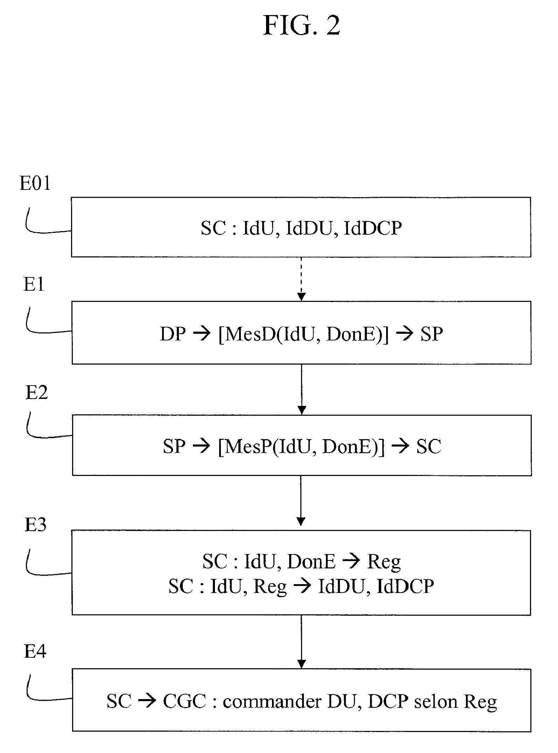

En référence à la figure 2, un procédé de gestion de consommation d'énergie de dispositifs communicants selon une réalisation de l'invention comprend des étapes E1 à E4 exécutées dans le système de communication.

Le procédé est décrit ci-après par rapport à un terminal de communication TC associé à un utilisateur qui est initialement présent dans un lieu de travail où est situé le terminal de communication.

A une étape préliminaire E01, un profil de l'utilisateur est créé dans le serveur de communication SC. Par exemple, ce profil est mémorisé sous la forme d'une table de correspondance dans une base de données et la table de correspondance contient notamment un identificateur IdU de l'utilisateur, des règles Reg associées à des identificateurs IdDU de dispositifs communicants personnels à l'utilisateur et à des identificateurs IdDCP de dispositifs communicants partagés entre plusieurs utilisateurs.

Il est considéré que les règles d'état de présence et les règles de localisation sont appliquées en combinaison.

Par ailleurs, un détecteur de présence DP, qui est une borne d'accès au lieu de travail, est configuré pour détecter si l'utilisateur entre ou sort de son lieu de travail par une identification RFID. Le détecteur de présence DP est associé au terminal de communication puisqu'il est situé dans la même zone géographique que le terminal de communication.

Par ailleurs, un autre détecteur de présence DP, qui est un module logiciel inclus dans l'ordinateur personnel de l'utilisateur à son lieu de travail et qui intègre un moyen de communications instantanées délivrant des informations de présence de l'utilisateur, est configuré pour détecter un changement de l'état de présence de l'utilisateur. Le détecteur de présence DP est associé au terminal de communication puisqu'il est inclus dans ce dernier.

A l'étape E1, un détecteur de présence DP détecte un évènement relatif à la présence de l'utilisateur dans une zone géographique donnée. Le détecteur de présence DP transmet un message de détection MesD au serveur de présence SP dans un format prédéfini. Le message MesD contient un identificateur IdU de l'utilisateur et des données d'évènement DonE relatives à l'évènement détecté.

Selon un autre exemple, les données d'évènement DonE contiennent notamment un changement de l'état de présence de l'utilisateur de l'état "en ligne" à l'état "hors ligne".

Selon un exemple, les données d'évènement DonE contiennent notamment la date d'identification du badge RFID de l'utilisateur et un type d'action indiquant la sortie de l'utilisateur de son lieu de travail.

A l'étape E2, le serveur de présence SP transmet un message de présence MesP au serveur de communication SC. Le message MesP contient l'identificateur d'utilisateur IdU et les données d'évènement DonE.

Optionnellement, le serveur de présence SP analyse les données d'évènement DonE et les convertit dans un autre format qui peut être interprété par le serveur de communication SC. En outre, le serveur de présence SP peut interpréter les données d'évènement DonE pour leur donner une signification explicite de la présence ou de l'absence de l'utilisateur. Selon l'exemple précédent sur la détection de la sortie de l'utilisateur de son lieu de travail, le serveur SP peut ajouter un champ de données signifiant l'absence de l'utilisateur, ou éventuellement restreindre le contenu des données d'évènement à ce dernier champ de données.

A l'étape E3, le serveur de communication SC analyse les données d'évènement DonE pour déterminer des règles Reg et identifier au moins un identificateur IdDU ou IdDCP d'un dispositif communicant DU ou DCP associé à l'identificateur d'utilisateur IdU en fonction des règles déterminées.

A l'étape E4, le serveur de communication SC détermine l'adresse du contrôleur de gestion de consommation CGC associé à chaque dispositif communicant identifié et transmet une requête au contrôleur CGC pour commander la mise sous tension ou hors tension, ou encore en veille du dispositif communicant en fonction des règles données Reg.

Ainsi, chaque dispositif communicant DU ou DCP associé à l'utilisateur peut être mis, automatiquement après le départ de l'utilisateur, dans un mode dans lequel le dispositif ne consomme plus d'énergie électrique ou en consomme moins.

Selon l'exemple dans lequel est détecté un changement de l'état de présence de l'utilisateur à son lieu de travail de l'état "en ligne" à l'état "hors ligne", les dispositifs fixes du lieu de travail de l'utilisateur qui étaient précédemment en mode "en service" sont mis en mode "hors service", les dispositifs fixes du domicile de l'utilisateur qui étaient précédemment en mode "hors service" restent en mode "hors service", et les dispositifs mobiles de l'utilisateur qui étaient précédemment en mode "en service" sont mis en mode "en veille".

Selon l'exemple dans lequel est détectée la sortie de l'utilisateur de son lieu de travail, les dispositifs fixes du lieu de travail de l'utilisateur qui étaient précédemment en mode "en service" sont mis en mode "hors service", les dispositifs fixes du domicile de l'utilisateur qui étaient précédemment en mode "hors service" restent en mode "hors service", et les dispositifs mobiles de l'utilisateur qui étaient précédemment en mode "en veille" sont mis en mode "en service".

En appliquant en combinaison les règles d'état de présence et les règles de localisation, les dispositifs fixes du lieu de travail de l'utilisateur sont en mode "hors service", les dispositifs fixes du domicile de l'utilisateur sont en mode "hors service", et les dispositifs mobiles de l'utilisateur sont en mode "en service".

Il est considéré que le serveur de communication SC reçoit d'abord les données d'évènement DonE relatives à un détecteur de présence DP dédié à la surveillance des informations de présence de l'utilisateur, et attend pendant un intervalle de temps donné pour les analyser en combinaison avec des données d'évènement DonE relatives à un détecteur de présence DP dédié à la surveillance de la localisation de l'utilisateur. Cet intervalle de temps peut être déterminé en fonction du type des détecteurs de présence. Dans les exemples précédents, le serveur de communication SC reçoit dans un premier temps les données d'évènement DonE contenant un changement de l'état de présence de l'utilisateur de l'état "en ligne" à l'état "hors ligne", et dans un deuxième temps les données d'évènement DonE contenant la date d'identification du badge RFID de l'utilisateur et un type d'action indiquant la sortie de l'utilisateur de son lieu de travail, l'intervalle de temps peut être défini à 15 minutes, ce qui laisse le temps à l'utilisateur d'éteindre son ordinateur personnel et de quitter son lieu de travail, les données d'évènement DonE contenant la date d'identification du badge RFID de l'utilisateur confirme la sortie de l'utilisateur de son lieu de travail, les dispositifs communicants fixes par exemple pouvant alors être mis hors tension.

Dans une réalisation, le détecteur de présence DP qui est inclus dans l'ordinateur personnel de l'utilisateur et qui intègre un moyen de communications instantanées délivrant des informations de présence de l'utilisateur, est également apte à déterminer la localisation de l'utilisateur, par exemple au moyen de l'adresse réseau de l'ordinateur personnel de l'utilisateur.

Dans ce cas, les données d'évènement DonE transmise par le détecteur de présence DP au serveur de communication SC contiennent le changement de l'état de présence de l'utilisateur et la localisation de l'utilisateur, et le serveur de communication SC peut appliquer les règles d'état de présence et les règles de localisation en fonction des données d'évènement DonE sans attendre pendant un intervalle de temps donné.

Le serveur de communication SC garde en mémoire l'historique de l'application de toutes les règles Reg par rapport à chacun des utilisateurs, afin de déterminer le mode dans lequel doit être chacun des dispositifs communicants DCP partagé entre les utilisateurs.

Par la réception de données d'évènement DonE relatives à chacun des utilisateurs, si le serveur de communication SC constate que l'état de présence de tous les utilisateurs dans leur messagerie instantanée est à l'état "hors ligne" ou "absent", le serveur de communication SC transmet une requête à chaque contrôleur CGC associé à un dispositif communicant DCP partagé entre les utilisateurs pour commander la mise hors tension de chaque dispositif communicant partagé. Par ailleurs, le serveur de communication SC transmet une requête à chaque contrôleur CGC associé à un dispositif communicant DCP partagé entre les utilisateurs pour commander la mise sous tension de chaque dispositif communicant partagé, dès que le serveur de communication SC reçoit des données d'évènement DonE qui sont relatives à au moins un utilisateur et qui indiquent que l'état de présence de l'utilisateur dans sa messagerie instantanée est différent de "hors ligne" et "absent".

Par ailleurs, un administrateur peut définir une priorité de certaines règles par rapport à d'autres règles, en fonction du type de dispositifs. Par exemple, les règles de temps peuvent être prioritaires pour les dispositifs partagés, c'est-à-dire les dispositifs partagés sont en mode "hors service" en dehors d'une plage horaire de 8h00 à 17h00, quel que l'état de présence et la localisation des utilisateurs.

Les exemples donnés dans les étapes du procédé peuvent être relatifs à l'arrivée de l'utilisateur sur son lieu de travail.

Par exemple, un détecteur de présence DP détecte un évènement relatif à la présence de l'utilisateur dans son lieu de travail et détermine des données d'évènement DonE contenant notamment un changement de l'état de présence de l'utilisateur de l'état "hors ligne" à l'état "en ligne", et éventuellement la date d'identification du badge RFID de l'utilisateur et un type d'action indiquant l'entrée de l'utilisateur dans son lieu de travail. Le détecteur de présence DP transmet alors un message de détection MesD au serveur de présence SP, contenant un identificateur IdU de l'utilisateur et des données d'évènement DonE relatives à l'évènement détecté.

Puis le serveur de présence SP transmet un message de présence MesP au serveur de communication SC. Le message MesP contient l'identificateur d'utilisateur IdU et les données d'évènement DonE. De même, le serveur de présence SP peut interpréter les données d'évènement DonE pour leur donner une signification explicite de la présence ou de l'absence de l'utilisateur. Selon l'exemple précédent sur la détection de l'entrée de l'utilisateur dans son lieu de travail, le serveur SP peut ajouter un champ de données signifiant la présence de l'utilisateur dans son lieu de travail, ou éventuellement restreindre le contenu des données d'évènement à ce dernier champ de données.

Puis le serveur de communication SC analyse les données d'évènement DonE pour déterminer des règles Reg et identifier au moins un identificateur IdDU ou IdDCP d'un dispositif communicant DU ou DCP associé à l'identificateur d'utilisateur IdU en fonction des règles déterminées. Le serveur de communication SC détermine l'adresse du contrôleur de gestion de consommation CGC associé à chaque dispositif communicant identifié et transmet une requête au contrôleur CGC pour commander la mise sous tension ou hors tension, ou encore en veille du dispositif communicant en fonction des règles données Reg.

Dans cet exemple, chaque dispositif communicant DU ou DCP associé à l'utilisateur est mis, automatiquement après l'arrivée de l'utilisateur, dans un mode dans lequel le dispositif consomme à nouveau ou plus d'énergie électrique.

Selon l'exemple dans lequel est détecté un changement de l'état de présence de l'utilisateur à son lieu de travail de l'état "hors ligne" à l'état "en ligne", les dispositifs fixes du lieu de travail de l'utilisateur qui étaient précédemment en mode "hors service" sont mis en mode "en service", les dispositifs fixes du domicile de l'utilisateur qui étaient précédemment en mode "hors service" restent en mode "hors service", et les dispositifs mobiles de l'utilisateur qui étaient précédemment en mode "en veille" sont mis en mode "en service".

Selon l'exemple dans lequel est détectée l'entrée de l'utilisateur dans son lieu de travail, les dispositifs fixes du lieu de travail de l'utilisateur qui étaient précédemment en mode "hors service" sont mis en mode "en service", les dispositifs fixes du domicile de l'utilisateur qui étaient précédemment en mode "hors service" restent en mode "hors service", et les dispositifs mobiles de l'utilisateur qui étaient précédemment en mode "en service" sont mis en mode "en veille".

En appliquant en combinaison les règles d'état de présence et les règles de localisation, les dispositifs fixes du lieu de travail de l'utilisateur sont en mode "en service", les dispositifs fixes du domicile de l'utilisateur sont en mode "hors service", et les dispositifs mobiles de l'utilisateur sont en mode "en service".

L'invention décrite ici concerne un procédé et un serveur pour la gestion de consommation d'énergie de dispositifs communicants. Selon une implémentation de l'invention, des étapes du procédé de l'invention sont déterminées par les instructions d'un programme d'ordinateur incorporé dans un serveur, tel que le serveur de communication SC. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour gérer la consommation d'énergie d'un ensemble de dispositifs communicants (DC) associé à un utilisateur qui est associé en outre à un terminal de communication (TC), le terminal de communication (TC) et l'ensemble de dispositifs communicants (DC) étant aptes à communiquer avec un serveur (SC) à travers un réseau de télécommunications (RT), le procédé comprenant les étapes suivantes dans le serveur :
recevoir des données d'évènement (DonE) relatives à la localisation de l'utilisateur et à un état de présence de l'utilisateur dans un moyen de communications instantanées incluse dans le terminal de communication (TC), depuis au moins un détecteur de présence associé au terminal de communication,
déterminer des règles de localisation et des règles d'état de présence en fonctions des données d'évènement (DonE), et
transmettre une requête à au moins un contrôleur (CGC) associé à l'ensemble de dispositifs communicants (DU) afin que le contrôleur (CGC) régule la consommation d'énergie de l'ensemble de dispositifs communicants (DU) en fonction des règles de localisation et des règles d'état de présence.

2. Procédé conforme à la revendication 1, selon lequel l'ensemble de dispositifs communicants (DU) comprend des dispositifs fixes et des dispositifs mobiles qui sont personnels à l'utilisateur.

3. Procédé conforme à la revendication 1 ou 2, selon lequel l'ensemble de dispositifs communicants (DU) comprend des dispositifs fixes (DCP) qui sont partagés entre plusieurs utilisateurs.

4. Procédé conforme à l'une des revendications 1 à 3, selon lequel les dispositifs fixes sont regroupés par zones géographiques.

5. Procédé conforme à l'une des revendications 1 à 4, selon lequel, des dispositifs fixes (DCP) étant partagés entre plusieurs utilisateurs et tous les utilisateurs ayant un état de présence donné associé à une règle d'état de présence, le serveur reçoit des données d'évènement (DonE) relatives à un état de présence de chaque utilisateur, détermine une règle d'état de présence en fonctions des données d'évènement (DonE), et transmet une requête à au moins un contrôleur (CGC) associé à l'ensemble de dispositifs fixes partagés entre les utilisateurs donnés afin que le contrôleur (CGC) régule la consommation d'énergie de l'ensemble de dispositifs communicants (DU) en fonction de la règle d'état de présence.

6. Procédé conforme à l'une des revendications 1 à 5, selon lequel le contrôleur (CGC) régule la consommation d'énergie de l'ensemble de dispositifs communicants (DC) en mettant chaque dispositif communicant dans l'un des modes selon lesquels toutes les fonctionnalités du dispositif communicant sont disponibles, seulement certaines fonctionnalités prédéfinies du dispositif communicant, et aucune fonctionnalité du dispositif communicant n'est disponible.

7. Serveur (SC) pour gérer la consommation d'énergie d'un ensemble de dispositifs communicants (DU) associé à un utilisateur qui est associé en outre à un terminal de communication (TC), le terminal de communication (TC) et l'ensemble de dispositifs communicants (DU) étant aptes à communiquer avec le serveur à travers un réseau de télécommunications (RT), le serveur comprenant :
des moyens pour recevoir des données d'évènement (DonE) relatives à la localisation de l'utilisateur et à un état de présence de l'utilisateur dans un moyen de communications instantanées incluse dans le terminal de communication (TC), depuis au moins un détecteur de présence associé au terminal de communication,
des moyens pour déterminer des règles de localisation et des règles d'état de présence en fonctions des données d'évènement (DonE), et
des moyens pour transmettre une requête à au moins un contrôleur (CGC) associé à l'ensemble de dispositifs communicants (DU) afin que le contrôleur (CGC) régule la consommation d'énergie de l'ensemble de dispositifs communicants (DU) en fonction des règles de localisation et des règles d'état de présence.

8. Programme d'ordinateur apte à être mis en oeuvre dans un serveur (SC) pour gérer la consommation d'énergie d'un ensemble de dispositifs communicants (DU) associé à un utilisateur qui est associé en outre à un terminal de communication (TC), le terminal de communication (TC) et l'ensemble de dispositifs communicants (DU) étant aptes à communiquer avec le serveur (SC) à travers un réseau de télécommunications (RT), ledit programme comprenant des instructions qui, lorsque le programme est chargé et exécuté dans ledit serveur, réalisent les étapes suivantes :
recevoir des données d'évènement (DonE) relatives à la localisation de l'utilisateur et à un état de présence de l'utilisateur dans un moyen de communications instantanées incluse dans le terminal de communication (TC), depuis au moins un détecteur de présence associé au terminal de communication,
déterminer des règles de localisation et des règles d'état de présence en fonctions des données d'évènement (DonE), et
transmettre une requête à au moins un contrôleur (CGC) associé à l'ensemble de dispositifs communicants (DU) afin que le contrôleur (CGC) régule la consommation d'énergie de l'ensemble de dispositifs communicants (DU) en fonction des règles de localisation et des règles d'état de présence.
